# FASCICULE DE BREVET EUROPEEN

(11) **EP 3 592 630 B1**
(45) Date de publication et mention de la délivrance du brevet: **19.05.2021**
(21) Numéro de dépôt: 18713323.6
(22) Date de dépôt: 09.03.2018
(51) Int. Cl.: B62D 21/15, B62D 25/08, B60K 15/063

(54) **STRUCTURE DE CAISSE DE VEHICULE AUTOMOBILE**
STRUKTUR FÜR EINE MOTORFAHRZEUGKAROSSERIE
MOTOR VEHICLE BODY STRUCTURE

(43) Date de publication de la demande: 15.01.2020
(73) Titulaire: Renault S.A.S., 92100 Boulogne-Billancourt (FR)
(72) Inventeur: NGUYEN, Luan, 91120 Palaiseau (FR); ERNAULT, Hubert, 78550 Maulette (FR); ESTIOT, Christophe, 28100 Dreux (FR)
(86) Numéro de dépôt international: PCT/FR2018/050554
(87) Numéro de publication internationale: WO 2018/162864

(56) Documents cités:
- WO-A1-2011/116809
- US-A1- 2015 165 994

## Description

La présente invention se rapporte à une structure de caisse d'un véhicule automobile comportant une unité avant monté en avant d'une partie d'habitacle du véhicule et dans laquelle est destiné à être agencé un réservoir de carburant du véhicule Le document WO 2001/116809 A1 divulgue une structure de caisse d'un véhicule automobile selon le préambule de la revendication 1.

Afin d'alléger les véhicules automobiles, il est connu de réaliser des carrosseries en combinant différents types de matériaux, en particulier de l'aluminium. Ainsi, la demanderesse développe des véhicules automobiles intégrant une caisse dans laquelle l'ensemble des éléments constituant la structure sont réalisés en aluminium et assemblés par collage-rivetage, permettant un montage moins onéreux et plus aisé. De tels véhicules sont donc particulièrement légers et un point crucial concerne leur comportement dynamique. A cet égard, il est apparu souhaitable d'intégrer le réservoir de carburant à l'avant du véhicule pour améliorer la répartition de masse entre les trains roulants avant et arrière du véhicule. Aussi, on peut prévoir une zone agencée au niveau de l'unité avant de la structure de caisse pour accueillir le réservoir de carburant. Il est alors essentiel de garantir l'intégrité du réservoir de carburant en cas de choc frontal. Usuellement, lorsque le véhicule rencontre un obstacle, le pare-chocs tend à s'enfoncer tandis que les longerons au niveau de l'unité avant se déforment et se compriment de façon irréversible en absorbant l'énergie du choc. Le réservoir se situant dans l'unité avant de la structure de caisse du véhicule, il faut pouvoir garantir que le réservoir ne subisse aucune atteinte et ce, sans compromettre la légèreté de la structure de caisse.

L'invention vise à répondre à ces exigences.

A cette fin, la présente invention propose une structure de caisse d'un véhicule automobile comprenant une unité avant s'étendant en avant d'une partie d'habitacle dudit véhicule automobile et dans laquelle est destiné à être agencé un réservoir de carburant, ladite unité avant comprenant un premier et un deuxième longerons, chaque premier et deuxième longeron étant un profilé creux orienté selon l'axe longitudinal dudit véhicule et présentant aux moins deux parois longitudinales opposées, respectivement une paroi longitudinale extérieure et une paroi longitudinale intérieure, se prolongeant vers des extrémités avant respectives desdits premier et deuxième longerons reliées entre elles par une première traverse d'extrémité avant de ladite unité avant, de façon à définir en avant de ladite unité avant une zone déformable apte à se comprimer de façon irréversible selon l'axe longitudinal pour absorber de l'énergie de choc, ladite structure de caisse étant caractérisée en ce qu'elle comprend une deuxième traverse d'extrémité avant reliant lesdits premier et deuxième longerons, disposée entre ladite partie d'habitacle et ladite première traverse d'extrémité avant de façon à délimiter, en une partie arrière desdits premier et deuxième longerons, un compartiment s'étendant entre ladite partie d'habitacle et ladite deuxième traverse d'extrémité avant, destiné à loger ledit réservoir de carburant, chaque longeron desdits premier et deuxième longerons étant pourvu, dans sa partie arrière, d'au moins un élément de renfort externe fixé latéralement à au moins l'une desdites parois longitudinales opposées de la partie arrière dudit longeron et d'au moins un élément de renfort interne inséré à l'intérieur de la partie arrière dudit longeron.

Grâce à cet agencement, la zone située en avant de la deuxième traverse et donc en avant du compartiment où est destiné à être situé le réservoir de carburant, est prévue pour se déformer de façon à absorber l'énergie de choc, tandis que les éléments de renfort interne et externe en partie arrière des longerons permettent de renforcer les longerons dans cette zone pour rendre le compartiment du réservoir de carburant quasi indéformable. De la sorte, l'intégrité du réservoir est préservée d'une part, par la zone déformable en avant du compartiment, dont le rôle est d'absorber l'énergie de choc et, d'autre part, par la zone quasi indéformable délimitée par le compartiment dans lequel doit être installé le réservoir.

Avantageusement, ledit élément de renfort interne est inséré à l'intérieur de la partie arrière dudit longeron sur toute la longueur de ladite partie arrière dudit longeron s'étendant entre ladite partie d'habitacle et ladite deuxième traverse d'extrémité avant.

Avantageusement, ledit élément de renfort interne est constitué d'un élément longitudinal profilé présentant une section droite en forme de H dont les deux faces longitudinales opposées sont destinées à être fixées respectivement contre le côté interne des deux parois longitudinales opposées dudit longeron pour assurer une liaison rigide entre ledit longeron et ledit élément longitudinal profilé lorsque ce dernier est insérée à l'intérieur de la partie arrière dudit longeron.

De préférence, ledit élément longitudinal profilé est un profilé extrudé en aluminium fixé par collage et rivetage.

Avantageusement, ledit au moins un élément de renfort externe comprend une première plaque d'habillage fixée sur le côté externe de la paroi longitudinale extérieure dudit longeron et une deuxième plaque d'habillage fixée sur le côté externe de la paroi longitudinale intérieure dudit longeron, lesdites première et deuxième plaques d'habillage présentant une section en forme de L et se chevauchant sur une paroi longitudinale horizontale dudit longeron.

De préférence, lesdites première et deuxième plaques d'habillage sont en aluminium et sont fixées par collage et rivetage.

Avantageusement, ledit au moins un élément de renfort externe comprend une doublure longitudinale de renfort fixée contre une face externe de la deuxième plaque d'habillage fixée sur le côté externe de la paroi longitudinale intérieure dudit longeron, de sorte que ladite doublure de renfort délimite avec ladite face externe de ladite deuxième plaque d'habillage un corps creux.

Avantageusement que ledit corps creux présente un volume interne croissant à mesure qu'il s'étend vers l'arrière selon ledit axe longitudinal.

Avantageusement encore, la doublure longitudinale de renfort comporte une extrémité arrière fixée contre un élément de fermeture de la partie arrière dudit longeron s'étendant transversalement à ladite paroi longitudinale intérieure dudit longeron.

De préférence, ladite doublure longitudinale de renfort est un embouti d'aluminium et est fixée par collage et rivetage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 illustre en vue de dessus la partie d'habitacle et l'unité avant de la structure de caisse de véhicule automobile conforme à l'invention ;
- la figure 2 est une vue en perspective de l'unité avant de la structure de caisse conforme à l'invention ;
- la figure 3 est une vue de détail en perspective de côté de la partie arrière de l'unité avant, au niveau du compartiment du réservoir de carburant, illustrant l'agencement de l'élément de renfort interne du longeron.

Les expressions telles que «arrière» et «avant», «gauche» et «droite», «supérieur » et «inférieur» et les orientations «longitudinale», «transversale» et «verticale» seront définies en référence au repère X, Y, Z représenté sur les figures, où les axes X, Y, Z, correspondent respectivement à l'axe longitudinal (orienté d'avant en arrière), transversal (orienté vers la droite) et vertical (orienté vers le haut) du véhicule.

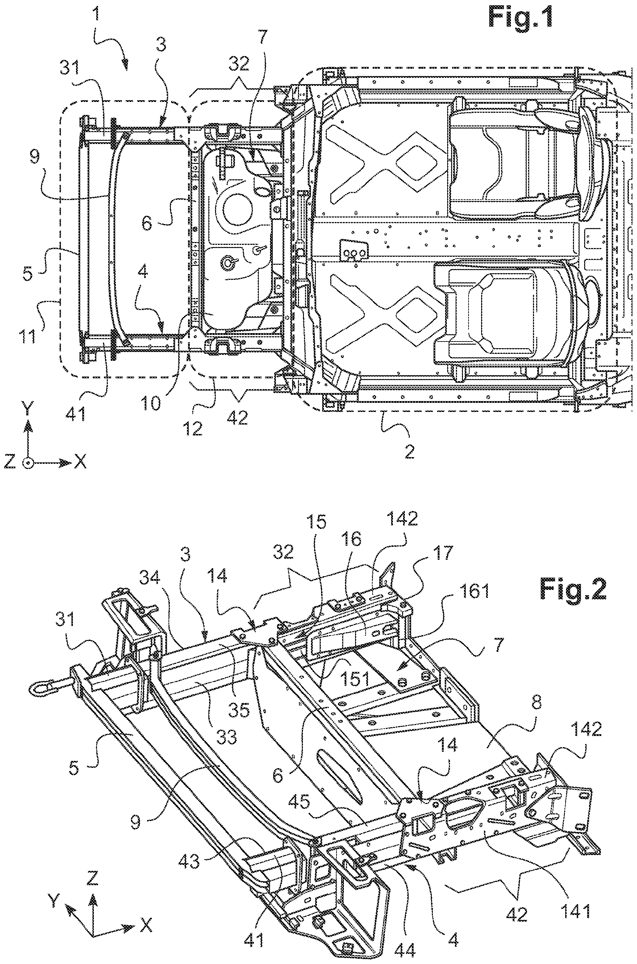

La Figure 1 illustre en vue de dessus une structure de caisse d'un véhicule automobile, comprenant une unité avant 1 disposée en avant d'une partie d'habitacle 2 du véhicule automobile. La structure de caisse selon l'invention est préférentiellement réalisée en aluminium et assemblée par collage et rivetage. Le véhicule est du type dans lequel l'unité avant 1 de la structure de caisse est prévue pour accueillir le réservoir de carburant 10 du véhicule en vue d'une meilleure répartition de masse entre les trains avant et arrière du véhicule, comme exposé plus haut.

L'unité avant 1 comprend deux longerons parallèles, respectivement un longeron avant droit 3 et un longeron avant gauche 4, qui s'étendent selon l'axe longitudinal X du véhicule à partir de la partie d'habitacle 2 vers des extrémités avant respectives des longerons 31 et 41, reliées entre elles par une première traverse d'extrémité avant 5 disposée au niveau du plan supérieur des longerons 3 et 4.

Les longerons avant droit 3 et gauche 4 sont également reliés entre eux par l'intermédiaire d'une deuxième traverse d'extrémité avant 6, disposée entre la partie d'habitacle 2 et la première traverse d'extrémité avant 5, de façon à délimiter, au niveau d'une partie arrière 32, 42 des longerons, qui s'entend de la partie des longerons qui s'étend entre la partie d'habitacle 2 et la deuxième traverse d'extrémité avant 6, un compartiment 7 dans lequel vient se loger le réservoir de carburant 10 dans l'unité avant 1. Autrement dit, la deuxième traverse d'extrémité avant 6 et les parties arrière respectives 32 et 42 des longerons avant droit et gauche 3, 4 constituent un cadre servant de bordure au réservoir 10. Un carénage 8 est disposé sous le plan inférieur des longerons 3, 4 au niveau de leur partie arrière 32, 42, sur lequel vient reposer le réservoir 10.

Une traverse intermédiaire 9 reliant les deux longerons avant droit 3 et gauche 4, peut également être disposée entre les deux traverses d'extrémité avant 5 et 6, immédiatement en arrière de la première traverse d'extrémité avant, et qui constitue la traverse de bac de rangement sous le capot du véhicule.

Les longerons avant droit 3 et gauche 4, ainsi que les première et deuxième traverses d'extrémité avant sont constitués de profilés creux extrudés, préférentiellement en aluminium, en forme de poutrelle tubulaire de section globalement rectangulaire.

La partie des longerons avant droit 3 et gauche 4 qui se prolongent en avant de la deuxième traverse d'extrémité avant 6, soit en avant du compartiment 7 du réservoir de carburant, définissent avec la première traverse d'extrémité avant 5, une zone déformable 11 en avant du compartiment 7, conçue pour se comprimer de façon irréversible selon l'axe longitudinal X du véhicule, de façon à permettre d'absorber de l'énergie de choc, notamment en cas de choc frontal du véhicule. Ainsi, lors d'un choc frontal du véhicule, les longerons 3 et 4 et la première traverse d'extrémité avant 5 subissent une contrainte axiale conduisant à leur compression, qui permet de dissiper de l'énergie et d'amortir, à tout le moins partiellement, le choc.

On doit faire en sorte d'empêcher au maximum la propagation de la compression des longerons 3, 4 vers leur partie arrière 32, 42 délimitant le compartiment 7 où est destiné à être logé le réservoir de carburant 10, afin de préserver l'intégrité de ce dernier. En effet, une compression de la partie arrière 32, 42 des longerons suivant l'axe X du véhicule ferait subir au réservoir 10 une contrainte axiale importante pouvant conduire à sa destruction.

Aussi, outre la présence de la zone déformable 11 prévue en avant de l'unité avant 1 devant le compartiment 7 du réservoir 10, la préservation de l'intégrité de ce dernier repose également sur le fait de renforcer les longerons avant droit et gauche 3 et 4 dans leur partie arrière respective 32 et 42, de façon à créer une zone 12 quasi indéformable dans cette zone de l'unité avant 1 délimitant le compartiment 7 du réservoir 10 de carburant. Par zone quasi indéformable 12, on entend une zone dans laquelle la déformation subie par les logerons 3, 4 en cas de choc frontal est faible, et à tout le moins est contenue de façon à ne pas provoquer un endommagement du réservoir de carburant. Cette zone quasi-indéformable 12 est séparée de la zone déformable 11 en avant de l'unité avant 1 par la deuxième traverse d'extrémité avant 6.

La zone quasi indéformable 12 est obtenue par l'ajout de renforts spécifiques au niveau de la partie arrière 32, 42 des longerons 3, 4, de sorte que leur section transversale présente une inertie compatible avec les efforts auxquels ils doivent résister, sans pour autant grever le poids de la structure de caisse.

En premier lieu, ces renforts spécifiques comprennent un élément de renfort interne prévu pour être inséré à l'intérieur de la partie arrière 32 et 42 de chaque longeron avant respectivement droit 3 et gauche 4, de préférence sur toute la longueur de ladite partie arrière. Autrement dit, cet élément de renfort interne est dimensionné pour s'étendre à l'intérieur de la partie arrière de chaque longeron entre la partie d'habitacle 2 et la deuxième traverse d'extrémité avant 6.

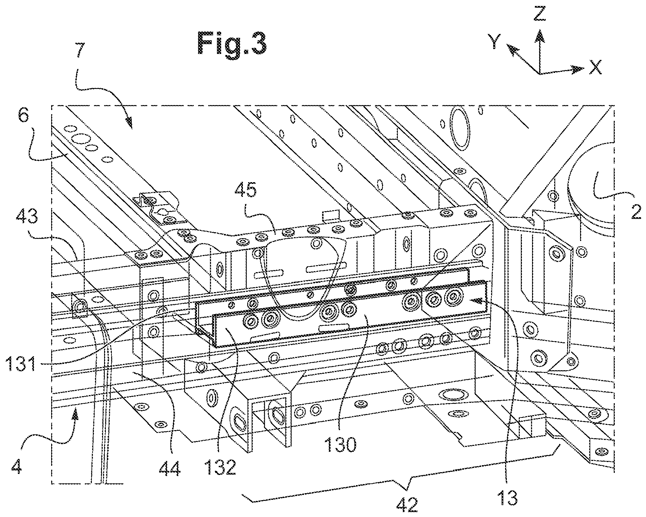

En référence au mode de réalisation illustré à la figure 3, l'élément de renfort interne 13 s'étend à l'intérieur de la partie arrière 42 du longeron avant gauche 4, soit dans le volume interne du profilé creux constituant le longeron avant gauche 4, et est constitué d'un élément longitudinal profilé 130, qui présente une section droite en forme de H dont les deux faces longitudinales opposées 131 et 132 viennent être fixées respectivement contre le côté interne des deux parois longitudinales opposées 43 et 44 du longeron avant gauche 4, respectivement la paroi longitudinale intérieure et la paroi longitudinale extérieure.

Dans un souci d'allègement du châssis, on utilise préférentiellement de l'aluminium pour réaliser l'élément longitudinal profilé 130, plutôt que de l'acier, et l'élément longitudinal profilé 130 est fixé du côté interne des parois longitudinales intérieure et extérieure 43 et 44 du profilé creux constituant le longeron avant gauche 4, lui-même préférentiellement en aluminium, par collage et rivetage. Toutefois, en variante, on pourrait également employer un acier présentant des caractéristiques mécaniques élevées pour réaliser l'élément longitudinal profilé 130 disposé à l'intérieur du longeron.

Cet agencement de l'élément de renfort interne 130 permet d'augmenter fortement la rigidité de la partie arrière 42 du longeron avant gauche 4 à l'intérieur duquel il est placé. Un tel agencement tel que décrit ci-dessus en référence au longeron avant gauche 4 se retrouve de la même façon du côté du longeron avant droit 3.

Les renforts spécifiques au niveau de la partie arrière 32, 42 des longerons 3, 4 comprennent aussi des éléments de renfort externes et notamment, des profilés d'habillage externe des longerons 3, 4 destinés à augmenter localement l'épaisseur des longerons dans leur partie arrière respective 32, 42. Ces profilés d'habillage externes comprennent, pour chaque longeron avant 3, 4, une première plaque d'habillage et une deuxième plaque d'habillage 14 et 15, présentant chacune une section droite en forme de L pour envelopper la partie arrière 32, 42 des longerons avant 3, 4, préférentiellement sur toute la longueur de leur partie arrière 32, 42. Plus précisément, pour chacun des longerons avant 3 et 4, la première plaque d'habillage 14, de section en forme de L, présente une première aile 141 fixée sur le côté externe de la paroi longitudinale extérieure du longeron, respectivement 34 et 44, et la deuxième plaque d'habillage 15, de section en forme de L, présente une première aile 151 fixée sur le côté externe de la paroi longitudinale intérieure de chaque longeron 3, 4, respectivement 33 et 43. Les premières ailes respectives 141 et 151 des première et deuxième plaques d'habillage 14 et 15 s'étendent de préférence sur toute la hauteur des parois longitudinales extérieure et intérieure des longerons. Par ailleurs, les première et deuxième plaques d'habillage 14 et 15 se chevauchent le long d'une paroi longitudinale horizontale 35, 45 des longerons 3, 4 par leur deuxième aile respective du L, seule la deuxième aile 142 de la première plaque d'habillage 14 étant visible sur la figure 2, qui recouvre la deuxième aile de la deuxième plaque d'habillage 15 disposée sous-jacente.

Comme expliqué plus haut, dans un souci d'allègement, on utilise également préférentiellement de l'aluminium pour réaliser les première et deuxième plaques d'habillage 14, 15 disposées en partie arrière 32, 42 des longerons avant 3, 4, et leur assemblage est préférentiellement réalisé par collage et rivetage.

Les éléments de renforts externes de la partie arrière des longerons comprennent encore, pour chaque longeron, une doublure longitudinale de renfort 16, qui est fixée contre une face externe de la deuxième plaque d'habillage 15, qui est elle-même fixée sur le côté externe de la paroi longitudinale intérieure du longeron, de façon à délimiter avec cette face externe de la deuxième plaque d'habillage 15 un corps creux s'étendant longitudinalement en partie arrière de chaque longeron, du côté intérieur à celui-ci. Seule la doublure longitudinale de renfort 16 disposée du côté du longeron avant droit 3 est visible à la figure 2. Cette doublure longitudinale de renfort 16 est préférentiellement un embouti d'aluminium assemblé par collage et rivetage.

Selon le mode de réalisation illustré à la figure 2, le corps creux délimité par la doublure longitudinale de renfort 16 présente un volume interne croissant à mesure qu'il s'étend vers l'arrière de la partie arrière 32 du longeron 3 selon l'axe longitudinal X, pour obtenir plus d'inertie en partie arrière. Une extrémité arrière 161 de la doublure longitudinale de renfort 16 vient en outre prendre appui contre un élément de fermeture 17 de la partie arrière 32 du longeron 3, qui s'étend transversalement à la paroi longitudinale intérieure 33 du longeron.

## Revendications

1. Structure de caisse d'un véhicule automobile comprenant une unité avant (1) s'étendant en avant d'une partie d'habitacle (2) dudit véhicule automobile et dans laquelle est destiné à être agencé un réservoir de carburant (10), ladite unité avant comprenant un premier et un deuxième longerons (3, 4), chaque premier et deuxième longeron (3, 4) étant un profilé creux orienté selon l'axe longitudinal (X) dudit véhicule et présentant aux moins deux parois longitudinales opposées (33, 34 ; 43, 44), respectivement une paroi longitudinale extérieure (34, 44) et une paroi longitudinale intérieure (33, 43), se prolongeant vers des extrémités avant respectives (31, 41) desdits premier et deuxième longerons (3, 4) reliées entre elles par une première traverse d'extrémité avant (5) de ladite unité avant (1), de façon à définir en avant de ladite unité avant une zone déformable (11) apte à se comprimer de façon irréversible selon l'axe longitudinal (X) pour absorber de l'énergie de choc, ladite structure de caisse étant **caractérisée en ce qu'**elle comprend une deuxième traverse d'extrémité avant (6) reliant lesdits premier et deuxième longerons (3, 4), disposée entre ladite partie d'habitacle (2) et ladite première traverse d'extrémité avant (5) de façon à délimiter, en une partie arrière (32, 42) desdits premier et deuxième longerons (3, 4), un compartiment (7) s'étendant entre ladite partie d'habitacle (2) et ladite deuxième traverse d'extrémité avant (6), destiné à loger ledit réservoir de carburant (10), chaque longeron desdits premier et deuxième longerons (3, 4) étant pourvu, dans sa partie arrière (32, 42), d'au moins un élément de renfort externe (14, 15, 16) fixé latéralement à au moins l'une desdites parois longitudinales opposées de la partie arrière dudit longeron et d'au moins un élément de renfort interne (13) inséré à l'intérieur de la partie arrière dudit longeron.

2. Structure de caisse selon la revendication 1, **caractérisé en ce que** ledit élément de renfort interne (13) est inséré à l'intérieur de la partie arrière (32, 42) dudit longeron (3, 4) sur toute la longueur de ladite partie arrière (32, 42) dudit longeron s'étendant entre ladite partie d'habitacle (2) et ladite deuxième traverse d'extrémité avant (6).

3. Structure de caisse selon la revendication 1 ou 2, **caractérisée en ce que** ledit élément de renfort interne (13) est constitué d'un élément longitudinal profilé (130) présentant une section droite en forme de H dont les deux faces longitudinales opposées (131, 132) sont destinées à être fixées respectivement contre le côté interne des deux parois longitudinales opposées (43, 44) dudit longeron pour assurer une liaison rigide entre ledit longeron et ledit élément longitudinal profilé (130) lorsque ce dernier est insérée à l'intérieur de la partie arrière dudit longeron.

4. Structure de caisse selon la revendication 3, **caractérisé en ce que** ledit élément longitudinal profilé (130) est un profilé extrudé en aluminium fixé par collage et rivetage.

5. Structure de caisse selon l'une quelconque des revendications 1 à 4, **caractérisée en ce que** ledit au moins un élément de renfort externe comprend une première plaque d'habillage (14) fixée sur le côté externe de la paroi longitudinale extérieure (34, 44) dudit longeron (3, 4) et une deuxième plaque d'habillage (15) fixée sur le côté externe de la paroi longitudinale intérieure (33, 43) dudit longeron (3, 4), lesdites première et deuxième plaques d'habillage présentant une section en forme de L et se chevauchant sur une paroi longitudinale horizontale (35, 45) dudit longeron (3, 4).

6. Structure de caisse selon la revendication 5, **caractérisé en ce que** lesdites première et deuxième plaques d'habillage (14, 15) sont en aluminium et sont fixées par collage et rivetage.

7. Structure de caisse selon la revendication 5 ou 6, **caractérisée en ce que** ledit au moins un élément de renfort externe comprend une doublure longitudinale de renfort (16) fixée contre une face externe de la deuxième plaque d'habillage (15) fixée sur le côté externe de la paroi longitudinale intérieure (33) dudit longeron, de sorte que ladite doublure de renfort (16) délimite avec ladite face externe de ladite deuxième plaque d'habillage (15) un corps creux.

8. Structure de caisse selon la revendication 7, **caractérisée en ce que** ledit corps creux présente un volume interne croissant à mesure qu'il s'étend vers l'arrière selon ledit axe longitudinal (X).

9. Structure de caisse selon la revendication 7 ou 8, **caractérisée en ce que** ladite doublure longitudinale de renfort (16) comporte une extrémité arrière (161) fixée contre un élément de fermeture (17) de la partie arrière (32) dudit longeron s'étendant transversalement à ladite paroi longitudinale intérieure (33) dudit longeron.

10. Structure de caisse selon l'une quelconque des revendications 7 à 9, **caractérisée en ce que** ladite doublure longitudinale de renfort (16) est un embouti d'aluminium et est fixée par collage et rivetage.

## Patentansprüche

1. Karosseriestruktur eines Kraftfahrzeugs, welche eine vordere Einheit (1) umfasst, die sich vor einem Innenraumteil (2) des Kraftfahrzeugs erstreckt und in welcher ein Kraftstofftank (10) angeordnet werden soll, wobei die vordere Einheit einen ersten und einen zweiten Längsträger (3, 4) umfasst, wobei der erste und der zweite Längsträger (3, 4) jeweils ein Hohlprofil sind, das entlang der Längsachse (X) des Fahrzeugs ausgerichtet ist und wenigstens zwei einander gegenüberliegende Längswände (33, 34; 43, 44) aufweist, eine äußere Längswand (34, 44) bzw. eine innere Längswand (33, 43), die sich zu jeweiligen vorderen Enden (31, 41) des ersten und des zweiten Längsträgers (3, 4) hin verlängern, die durch einen ersten vorderen Endquerträger (5) der vorderen Einheit (1) miteinander verbunden sind, so dass vor der vorderen Einheit ein verformbarer Bereich (11) definiert wird, der entlang der Längsachse (X) irreversibel zusammendrückbar ist, um Aufprallenergie zu absorbieren, wobei die Karosseriestruktur **dadurch gekennzeichnet ist, dass** sie einen zweiten vorderen Endquerträger (6) umfasst, der den ersten und den zweiten Längsträger (3, 4) verbindet und der zwischen dem Innenraumteil (2) und dem ersten vorderen Endquerträger (5) angeordnet ist, so dass in einem hinteren Teil (32, 42) des ersten und des zweiten Längsträgers (3, 4) ein Raum (7) begrenzt wird, der sich zwischen dem Innenraumteil (2) und dem zweiten vorderen Endquerträger (6) erstreckt und dazu bestimmt ist, den Kraftstofftank (10) aufzunehmen, wobei jeder Längsträger von dem ersten und dem zweiten Längsträger (3, 4) in seinem hinteren Teil (32, 42) mit wenigstens einem äußeren Verstärkungselement (14, 15, 16), das seitlich an wenigstens einer der einander gegenüberliegenden Längswände des hinteren Teils des Längsträgers befestigt ist, und mit wenigstens einem inneren Verstärkungselement (13), das ins Innere des hinteren Teils des Längsträgers eingesetzt ist, versehen ist.

2. Karosseriestruktur nach Anspruch 1, **dadurch gekennzeichnet, dass** das innere Verstärkungselement (13) ins Innere des hinteren Teils (32, 42) des Längsträgers (3, 4) auf der gesamten Länge des hinteren Teils (32, 42) des Längsträgers eingesetzt ist, die sich zwischen dem Innenraumteil (2) und dem zweiten vorderen Endquerträger (6) erstreckt.

3. Karosseriestruktur nach Anspruch 1 oder 2, **dadurch gekennzeichnet, dass** das innere Verstärkungselement (13) aus einem Längsprofilelement (130) besteht, das einen H-förmigen geraden Querschnitt aufweist und dessen zwei einander gegenüberliegenden Längsflächen (131, 132) dazu bestimmt sind, an der Innenseite jeweils einer der zwei einander gegenüberliegenden Längswände (43, 44) des Längsträgers befestigt zu werden, um eine starre Verbindung zwischen dem Längsträger und dem Längsprofilelement (130) sicherzustellen, wenn dieses Letztere ins Innere des hinteren Teils des Längsträgers eingesetzt ist.

4. Karosseriestruktur nach Anspruch 3, **dadurch gekennzeichnet, dass** das Längsprofilelement (130) ein stranggepresstes Profilteil aus Aluminium ist, das durch Kleben und Nieten befestigt ist.

5. Karosseriestruktur nach einem der Ansprüche 1 bis 4, **dadurch gekennzeichnet, dass** das wenigstens eine äußere Verstärkungselement eine erste Verkleidungsplatte (14), die an der Außenseite der äußeren Längswand (34, 44) des Längsträgers (3, 4) befestigt ist, und eine zweite Verkleidungsplatte (15), die auf der Außenseite der inneren Längswand (33, 43) des Längsträgers (3, 4) befestigt ist, umfasst, wobei die erste und die zweite Verkleidungsplatte einen L-förmigen Querschnitt aufweisen und eine horizontale Längswänd (35, 45) des Längsträgers (3, 4) übergreifen.

6. Karosseriestruktur nach Anspruch 5, **dadurch gekennzeichnet, dass** die erste und die zweite Verkleidungsplatte (14, 15) aus Aluminium und durch Kleben und Nieten befestigt sind.

7. Karosseriestruktur nach Anspruch 5 oder 6, **dadurch gekennzeichnet, dass** das wenigstens eine äußere Verstärkungselement eine sich längs erstreckende Verstärkungsverkleidung (16) umfasst, die an einer Außenfläche der zweiten Verkleidungsplatte (15) befestigt ist, die auf der Außenseite der inneren Längswand (33) des Längsträgers befestigt ist, so dass die Verstärkungsverkleidung (16) mit der Außenfläche der zweiten Verkleidungsplatte (15) einen Hohlkörper begrenzt.

8. Karosseriestruktur nach Anspruch 7, **dadurch gekennzeichnet, dass** der Hohlkörper ein Innenvolumen aufweist, das mit seiner Erstreckung entlang der Längsachse (X) nach hinten zunimmt.

9. Karosseriestruktur nach Anspruch 7 oder 8, **dadurch gekennzeichnet, dass** die sich längs erstreckende Verstärkungsverkleidung (16) ein hinteres Ende (161) aufweist, das an einem Verschlusselement (17) des hinteren Teils (32) des Längsträgers befestigt ist, welches sich quer zur inneren Längswand (33) des Längsträgers erstreckt.

10. Karosseriestruktur nach einem der Ansprüche 7 bis 9, **dadurch gekennzeichnet, dass** die sich längs erstreckende Verstärkungsverkleidung (16) ein Aluminiumpressteil ist und durch Kleben und Nieten befestigt ist.

## Claims

1. Motor vehicle body structure comprising a front unit (1) extending in front of a passenger compartment portion (2) of said motor vehicle and in which a fuel tank (10) is to be arranged, said front unit comprising a first and a second side member (3, 4), each first and second side member (3, 4) being a hollow profile oriented along the longitudinal axis (X) of said vehicle and having at least two opposing longitudinal walls (33, 34; 43, 44), an external longitudinal wall (34, 44) and an internal longitudinal wall (33, 43) respectively, extending towards respective front ends (31, 41) of said first and second side members (3, 4) connected to each other by a first front end crossmember (5) of said front unit (1), so as to define in front of said front unit a deformable zone (11) able to be irreversibly compressed along the longitudinal axis (X) to absorb impact energy, said body structure being **characterized in that** it comprises a second front end crossmember (6) connecting said first and second side members (3, 4), arranged between said passenger compartment portion (2) and said first front end crossmember (5), so as to delimit, in a rear part (32, 42) of said first and second side members (3, 4), a compartment (7) extending between said passenger compartment portion (2) and said second front end crossmember (6), for housing said fuel tank (10), the rear part (32, 42) of each side member of said first and second side members (3, 4) being provided with at least one external reinforcing element (14, 15, 16) laterally attached to at least one of said opposing longitudinal walls of the rear part of said side member and at least one internal reinforcing element (13) inserted inside the rear part of said side member.

2. Body structure according to Claim 1, **characterized in that** said internal reinforcing element (13) is inserted inside the rear part (32, 42) of said side member (3, 4) over the entire length of said rear part (32, 42) of said side member extending between said passenger compartment portion (2) and said second front end crossmember (6).

3. Body structure according to Claim 1 or 2, **characterized in that** said internal reinforcing element (13) consists of a longitudinal profile element (130) having an H-shaped cross-section the two opposing longitudinal faces (131, 132) of which are to be attached respectively onto the inner side of the two opposing longitudinal walls (43, 44) of said side member to provide a rigid connection between said side member and said longitudinal profile element (130) when the latter is inserted inside the rear part of said side member.

4. Body structure according to Claim 3, **characterized in that** said longitudinal profile element (130) is an extruded aluminum profile attached by bonding and riveting.

5. Body structure according to any one of Claims 1 to 4, **characterized in that** said at least one external reinforcing element comprises a first cover plate (14) attached on the outer side of the external longitudinal wall (34, 44) of said side member (3, 4) and a second cover plate (15) attached on the outer side of the internal longitudinal wall (33, 43) of said side member (3, 4), said first and second cover plates having an L-shaped cross-section and overlapping on a horizontal longitudinal wall (35, 45) of said side member (3, 4).

6. Body structure according to Claim 5, **characterized in that** said first and second cover plates (14, 15) are made from aluminum and are attached by bonding and riveting.

7. Body structure according to Claim 5 or 6, **characterized in that** said at least one external reinforcing element comprises a longitudinal reinforcing liner (16) attached onto an outer face of the second cover plate (15) attached on the outer side of the internal longitudinal wall (33) of said side member, so that said reinforcing liner (16) delimits, with said outer face of said second cover plate (15), a hollow body.

8. Body structure according to Claim 7, **characterized in that** said hollow body has an inner volume that increases as it extends towards the rear along said longitudinal axis (X).

9. Body structure according to Claim 7 or 8, **characterized in that** said longitudinal reinforcing liner (16) includes a rear end (161) attached onto a closing element (17) of the rear part (32) of said side member extending transversely to said internal longitudinal wall (33) of said side member.

10. Body structure according to any one of Claims 7 to 9, **characterized in that** said longitudinal reinforcing liner (16) is an aluminum stamping and is attached by bonding and riveting.
